# EUROPÄISCHE PATENTSCHRIFT

(11) **EP 1 586 155 B1**
(45) Veröffentlichungstag und Bekanntmachung des Hinweises auf die Patenterteilung: **27.01.2010**
(21) Anmeldenummer: 03753320.5
(22) Anmeldetag: 19.09.2003
(51) Int. Cl.: H02K 15/02

(54) **STÄNDERBLECHPAKET**
LAMINATED STATOR CORE
PAQUET DE TOLES DE STATOR

(30) Priorität: 20.09.2002 DE 10243985
(43) Veröffentlichungstag der Anmeldung: 19.10.2005
(73) Patentinhaber: ROBERT BOSCH GMBH, 70442 Stuttgart (DE)
(72) Erfinder: RAU, Eberhard, 70825 Korntal-Muenchingen (DE); HENNE, Martin, 71696 Moeglingen (DE); PFLUEGER, Klaus, 71735 Eberdingen (DE)
(86) Internationale Anmeldenummer: PCT/DE2003/003133
(87) Internationale Veröffentlichungsnummer: WO 2004/030184

(56) Entgegenhaltungen:
- DE-A- 3 418 069
- DE-A- 4 421 399
- US-A1- 2001 015 589
- US-B1- 6 262 511

## Beschreibung

### Stand der Technik

Die Erfindung betrifft ein Ständerblechpaket nach den Merkmalen des unabhängigen Patentanspruchs. Aus der DE-OS 4421399 ist ein Ständerblechpaket bekannt, das aus einer Vielzahl von Einzellamellen besteht, die zusammen gesetzt bzw. paketiert den Ständerkern bilden. Um einen kostengünstig herzustellenden, hohe Genauigkeit aufweisenden Statorkern für eine elektrische Maschine zu schaffen, sind die nach radial innen gerichteten Flächen der Zähne mittels einer Schweißnaht verbunden.

Desweiteren ist aus der JP 9-103052 ein Ständerblechpaket bekannt, das aus mehreren streifenförmigen Lamellen besteht. Nach dem Paketieren der Lamellen und dem Einlegen einer Ständerwicklung wird die Montagebaugruppe aus Ständerblechpaket und Wicklung zu einem runden Ständer gebogen. Dabei kann es zu der Erscheinung kommen, dass die nach radial innen gerichteten Zähne der einzelnen Lamellen insbesondere der axial außen angeordneten Lamellen etwas in axialer Richtung abstehen.

Die US 6,262,511 offenbart ein Ständerblechpaket (first cylinder body) für eine elektrische Maschine, das aus einzelnen, geschichteten Lamellen besteht, wobei dieses Ständerblechpaket eine mit Zähnen und Nuten (zur Aufnahme einer Wicklung) versehene Seite aufweist.

### Vorteile der Erfindung

Das erfindungsgemäße runde Ständerblechpaket mit den Merkmalen des Hauptanspruchs hat den Vorteil, dass durch die zumindest eine Schweißnaht in einem Nutgrund einerseits die geschichteten Lamellen fixiert sind und andererseits ein Aufspreizen der nach radial innen gerichteten Zähne des rund gebogenen Ständerblechpakets weitgehend verhindert wird. Durch die in den Unteransprüchen aufgeführten Maßnahmen sind vorteilhafte Weiterbildungen des Ständerblechpakets nach dem Hauptanspruch möglich. Eine besonders günstige Anordnung mehrerer Schweißnähte ist dann gegeben, wenn mehrere Schweißnähte in einem Abstand voneinander angeordnet sind, die im Wesentlichen einer Periodizität von 2 mal τₚ entspricht. Durch magnetische Asymmetrien (Stoffinhomogenitäten, geometrische Unsymmetrien, Fertigungstoleranzen, Montagefehler, ...) im Pfad des Hauptflusses bedingte unterschiedliche Polflüsse erzeugen einen Ausgleichsfluss, der in der Windung bestehend aus Lamellen (jeweils tangentialer Teil der Windung) und Schweißverbindung (jeweils axialer Teil der Windung eine Spannung induziert, die in dieser Windung wiederum einen Kreisstrom treiben kann, der die elektrische Maschine thermisch belastet. Dieser Kreisstrom kann durch die Periodizität von 2 mal τₚ minimiert werden.

Insbesondere im Zusammenhang mit Drehstrommaschinen für die Anwendung in Kraftfahrzeugen ist vorgesehen, dass der Abstand zumindest zweier Schweißnähte 6 Zähne und zusätzlich einer Toleranz von maximal 2 Zähnen entspricht. Durch eine derartige Anordnung ergeben sich die Vorteile, dass zum einen für die im wesentlichen 12- (entsprechend 36- und 72-nutigen) bis 16-polige (entsprechend 48- und 96-nutigen) Ausführungen die erwähnte Periodizität von 2 mal τₚ erfüllt wird und zum anderen die Ständerblechpakete von ihrem mit diesen Polzahlen verbundenen Bauvolumen her mechanisch sicher zusammengehalten sind.

Gemäß einer weiteren Ausgestaltung der Erfindung ist vorgesehen, dass beidseitig einer Stoßstelle, an der zumindest 2 Enden zumindest zweier streifenförmiger Lamellen aneinander anliegen, beidseitig der Stoßstelle in der jeweils nächsten Nut je eine Schweissnaht mehrere Lamellen miteinander verbindet. Wird das zunächst streifenförmige Ständerblechpaket an eben dieser ersten bzw. letzten Nut des Ständerblechpakets geschweißt, so ergibt sich als wesentlicher Vorteil, dass das zunächst streifenförmige Blechpaket an seinen jeweiligen Stirnenden nicht auseinander "franst" und sich somit eine qualitativ hochwerte Stossstelle mit hoher Formgenauigkeit ergibt. Eine weitere Verbesserung des Ständerblechpakets ergibt sich insbesondere dann, wenn wiederum beidseitig der Soßstelle je eine Schweißnaht mehrere Lamellen auf einer Außenseite, d.h. auf der Seite des Ständerblechpakets verbindet, die den dynamoelektrisch wirksamen Zähnen entgegen gesetzt ist.

Eine weitere Verbesserung des Ständerblechpakets ergibt sich dann, wenn in der Stoßstelle zumindest eine Schweißnaht auf der Außenseite des Ständerblechpakets angebracht ist. Die Stoßstelle stellt im Betriebsfall eine geschwächte Stelle dar, so dass die hier unter Magnetfluss stehenden Ständerzähne und das Ständerblechpaket an sich zu Schwingungen neigen, die durch eine entsprechende Schweißnaht auf der Außenseite vermindert werden können. Gleiche Vorteile ergeben sich bezüglich einer Schweißnaht auf der Innenseite der Stoßstelle.

Weitere Vorteile ergeben sich, wenn am Außenumfang zumindest 2 Schweißnähte angebracht sind, die in einem Abstand voneinander angeordnet sind, der im Wesentlichen einer Periodizität von 2 mal τₚ entspricht. Die Vorteile dieser Anordnung sind wiederum die bereits erwähnte Minimierung der Kreisströme, die die elektrische Maschine thermisch belasten.

### Zeichnungen

In den Zeichnungen sind Ausführungsbeispiele eines erfindungsgemäßen Ständerblechpakets dargestellt.

Es zeigen:
Figur 1a bis Figur 1e ein prinzipielles Herstellverfahren gemäß der hier beschriebenen Erfindung,
Figur 2 ein erstes Ausführungsbeispiel eines Ständerblechpakets mit 36 Nuten,
Figur 3 ein zweites Ausführungsbeispiel eines Ständerblechpakets mit 48 Nuten,
Figur 4 ein drittes Ausführungsbeispiel eines Ständerblechpakets mit 48 Nuten,
Figur 5 ein viertes Ausführungsbeispiel eines Ständerblechpakets mit 48 Nuten und im Durchmesser vergrößerten Mittellamellen,
Figur 6 ein fünftes Ausführungsbeispiel eines Ständerblechpakets in einer Abwandlung des Ausführungsbeispiels aus Figur 5,
Figur 7 ausschnittweise eine Nut mit zwei Schweißnähten im Nutgrund.

### Beschreibung

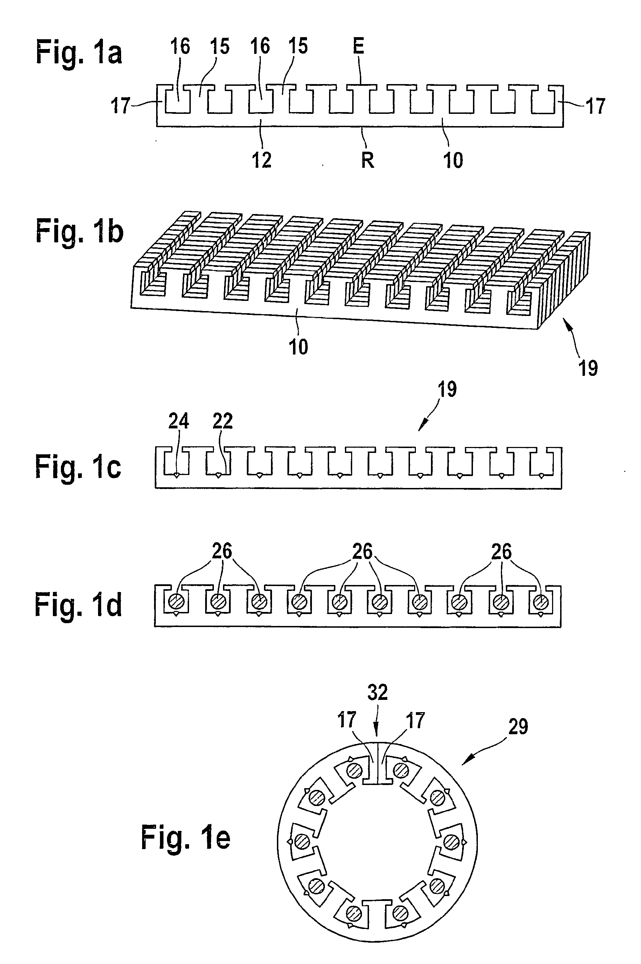

In den Figuren 1a bis 1e ist prinzipiell das erfindungsgemäße Verfahren zur Herstellung des erfindungsgemäßen Ständerblechpakets dargestellt.
Figur 1a zeigt eine einzelne, streifenförmige Lamelle 10, die einerseits eine Rückenseite R und eine elektrisch wirksame Seite E aufweist. Die Rückenseite besteht aus einem durchgängigen Jochteil 12, von dem sich einstückig in Richtung zur elektromagnetisch wirksamen Seite E einzelne Zähne 15 erstrecken. Zwischen den Zähnen 15 sind Nuten 16 vorgesehen. Die streifenförmige Lamelle 10 hat zwei Enden, wobei an jedem Ende ein Endzahn 17 angeordnet ist. Die Form der streifenförmigen Lamelle 10 ist nicht auf eine gerade Form, wie in Figur 1a bis 1e dargestellt, beschränkt, sondern kann auch beispielsweise eine Kurvenform aufweisen, beispielsweise eine Bogenform, wobei dann das Jochteil 12 ungerade ist. Mehrere Lamellen 10 werden in einem weiteren Verfahrensschritt so paketiert, dass alle Zähne 15 bzw. Nuten 16 deckend übereinander liegen, siehe auch Figur 1b. Die zusammen paketierten Lamellen 10 bilden nun ein lamelliertes Streifenpaket 19. Gemäß dem erfindungsgemäßen Ständerblechpaket ist nun in einem weiteren Verfahrensschritt vorgesehen, dass in zumindest einem Nutgrund 22 eine Schweissnaht 24 zur Fixierung der geschichteten Lamellen 10 gesetzt wird. Im dargestellten Beispiel nach Figur 1c ist in jedem Nutgrund 22 eine Schweißnaht 24 gesetzt. In einem weiteren Verfahrensschritt gemäß Figur 1d wird das fixierte lamellierte Streifenpaket 19 mit einer symbolisch dargestellten Wicklung 26 besetzt. Die symbolisch dargestellten Leiterelemente sind vollständig in den Nuten 16 angeordnet. In einem weiteren Verfahrensschritt gemäß Figur 1e wird das nunmehr vormontierte, lamellierte Streifenpaket 19 mit der Wicklung 26 schließlich so umgeformt, dass ein ringförmiges Ständerblechpaket 29 entsteht. In einem weiteren, nicht dargestellten Verfahrensschritt ist üblicherweise vorgesehen, dass das Ständerblechpaket 29 an einer Fügestelle 32 beispielsweise durch Schweißen verbunden wird. Die Fügestelle 32 entsteht dadurch, dass die Endzähne 17 dort aneinander stoßen.

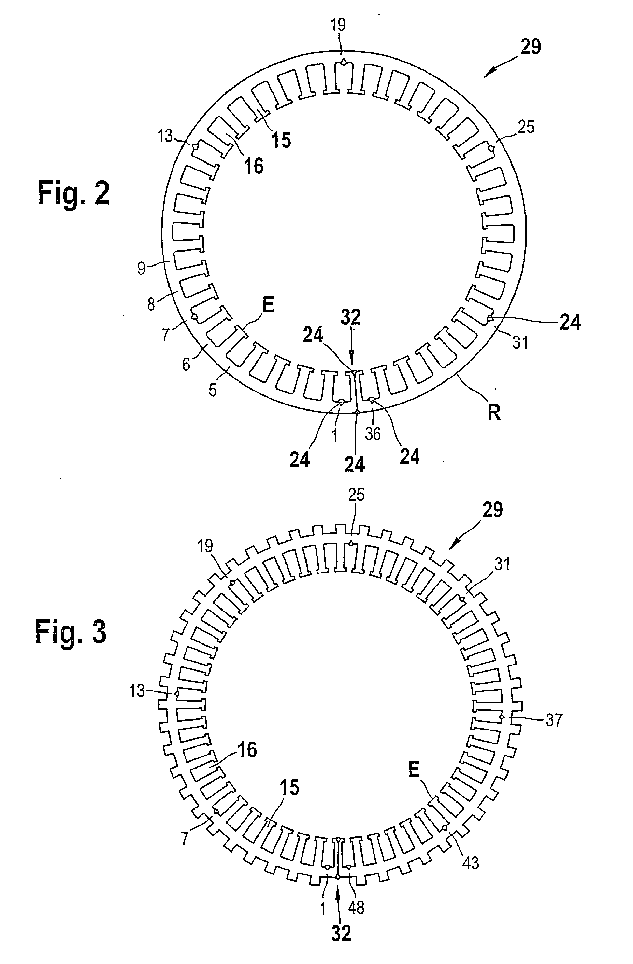

In Figur 2 wie auch in den nachfolgenden Figuren ist das Ständerblechpaket 29 vereinfacht ohne Wicklung 26 dargestellt, obwohl im runden Zustand durchaus eine Wicklung 26 angeordnet ist. Figur 2 zeigt ein insgesamt 36 Nuten 16 und 36 Zähne 15 aufweisendes Ständerblechpaket 29. Dieses Ständerblechpaket 29 ist für eine 12-polige Drehstrommaschine vorgesehen. In dem hier beschriebenen Ausführungsbeispiel sind mehrere Schweißnähte 24 vorgesehen, die in einem bestimmten Abstand voneinander angeordnet sind. Eine erste Schweißnaht 24 ist in der mit der Positionszahl 1 bezeichneten Nut 16 gezogen bzw. gesetzt. Weitere Schweißnähte 24 sind in den mit den Positionszahlen 7, 13, 19, 25 und 31 bezeichneten Nuten 16 positioniert. Die Abstände zwischen den Schweißnähten 24 in den Nuten 16 mit den Positionszahlen 1, 7, 13, 19, 25 und 21 sind zur jeweils nächstgelegenen - mit Ausnahme von der Schweißnaht 24 in der Nut 36 - in einem Abstand auseinander liegend, der genau einem zweifachen Polabstand entspricht. Dieser Abstand kann auch so ausgedrückt werden, dass der Abstand beispielsweise zwischen der Schweißnaht 24 in der Nut 16 mit der Positionszahl 1 zur Schweißnaht 24 in der Nut 16 mit der Positionszahl 7 dem 2-fachen einer Polteilung τₚ beträgt. Die Größe τₚ entspricht der Polteilung. Aus Festigkeitsgründen ist es nicht zwingend notwendig, dass der Abstand zwischen zwei Schweißnähten 24 dem 2-fachen einer Polteilung τₚ entspricht. Im Bezug zu den Schweißnähten 24 in den Nuten 16 mit den Positionszahlen 1, 7 und 13 kann beispielsweise die Schweißnaht 24, die in der Nut 16 mit der Positionszahl 7 vorgesehen ist, auch um maximal +/- 2 Nuten verschoben sein, so dass die Schweißnaht 24, welche bisher in der Nut mit der Positionszahl 7 gesetzt ist, auch in den Nuten 16 mit den Positionszahlen 5, 6, 8 oder 9 angeordnet sein kann. Analog gilt dies für die Schweißnähte 24 um die Nuten 16 mit den Positionszahlen 13, 19, 25 und 31. Die Schweißnaht 24 in der Nut 16 mit der Positionszahl 36 fällt etwas aus der Reihe. Diese Schweißnaht 24 dient an sich dazu, das Ständerblechpaket 29 vor dem Rundbiegen, siehe auch Figur 1c und Figur 1e an den Enden des lamellierten Streifenpakets 13 zusammen zu halten. Dies führt dazu, dass an der Stoßstelle 32, an der zumindest zwei Enden zumindest einer streifenförmigen Lamelle 10 aneinander anliegen, beiderseits der Stoßstelle 32 in der jeweils nächsten Nut 16, hier die Nuten 16 mit den Positionszahlen 1 und 36 mehrere Lamellen 10 miteinander verbindet. Darüber hinaus ist vorgesehen, dass in der Stoßstelle 32 zumindest eine Schweißnaht 24 auf der Außenseite, d.h. hier an der Seite R des Ständerblechpakets 29 angebracht ist. Gleiches gilt für die radiale Innenseite der Fügestelle 32, so dass an der Stoßstelle 32 zumindest eine Schweißnaht 24 auf der Innenseite - die elektromagnetisch wirksame Seite E - angebracht ist.

Im Ausführungsbeispiel nach Figur 3 ist ein Ständerblechpaket 29 für eine Drehstrommaschine vorgesehen, die insgesamt 16 Pole aufweist. Dementsprechend weist das Ständerblechpaket 29 an seiner radialen Innenseite E insgesamt 48 Zähne 15 und 48 Nuten 16 auf. Auch hier ist die gleiche Auslegungsvorschrift wie bereits erwähnt angewandt, so dass wiederum in den Nuten 1, 7, 13, 19, 25, 31, 37 und 43 Schweißnähte 24 angebracht sind. Ebenso wie bereits im Ausführungsbeispiel zuvor, ist in der Nut 16 bzw. dem Nutgrund 22, der der Stoßstelle 32 nächstliegend ist, je eine Schweißnaht 24 angebracht. In diesem Fall ist also in der Nut 16 mit der Positionszahl 48 ebenso eine Schweißnaht 24 angebracht.

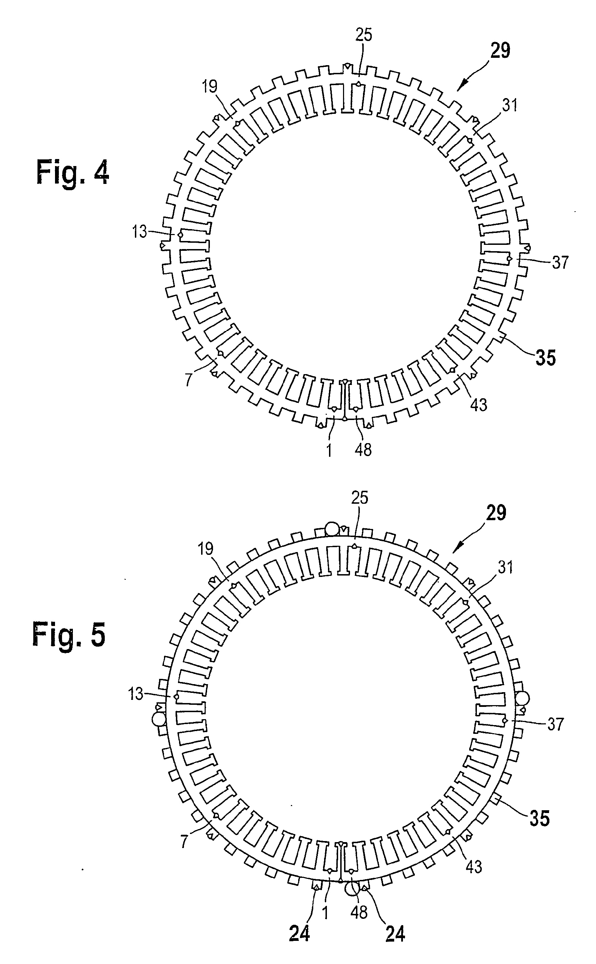

Im Ausführungsbeispiel nach Figur 4 ist das gleiche Ständerblechpaket 29 wie in Figur 3 dargestellt. Im Unterschied zum Ausführungsbeispiel aus Figur 3 weisen Außenzähne 35 je eine Schweißnaht 24 auf. Die Schweißnähte 24 auf den Außenzähnen 35 sind derart angeordnet, dass diese Schweißnähte 24 auf den Außenzähnen 35 angebracht sind, die den Nuten 16 mit den Positionszahlen 1, 7, 13, 19, 25, 31, 37, 43 und 48 jeweils am nächsten liegen. Demzufolge ist vorgesehen, dass beidseitig der Stoßstelle 32 je eine Schweißnaht 24 mehrere Lamellen 10 auf einer Außenseite R miteinander verbinden.

Das Ausführungsbeispiel gemäß Figur 5 zeigt eine Abwandlung der Ausführungsbeispiele aus Figur 3 und Figur 4. Dieses Ständerblechpaket 29 besteht aus unterschiedlichen Lamellen 10. In etwa in der Mitte des Ständerblechpakets 29, d.h. in der axialen Mitte, befinden sich Lamellen 10 mit Außenzähnen 35, wobei beiderseits dieser mittigen Lamellen 10 Lamellen 10 ohne Außenzähne 35 angeordnet sind. In diesem Fall weisen lediglich die mittigen Lamellen 10 mit den Außenzähnen 35 an den bereits zum Ausführungsbeispiel gemäß Figur 4 beschriebenen Stellen Schweißnähte 24 auf. Die Schweißnähte 24 auf den Außenzähnen 35, siehe Figur 4 und Figur 5, sind im Übrigen deshalb auf den Außenzähnen 35 angeordnet, damit die dadurch entstehenden Gefügeänderungen vom Jochteil 12 möglichst weit entfernt sind.

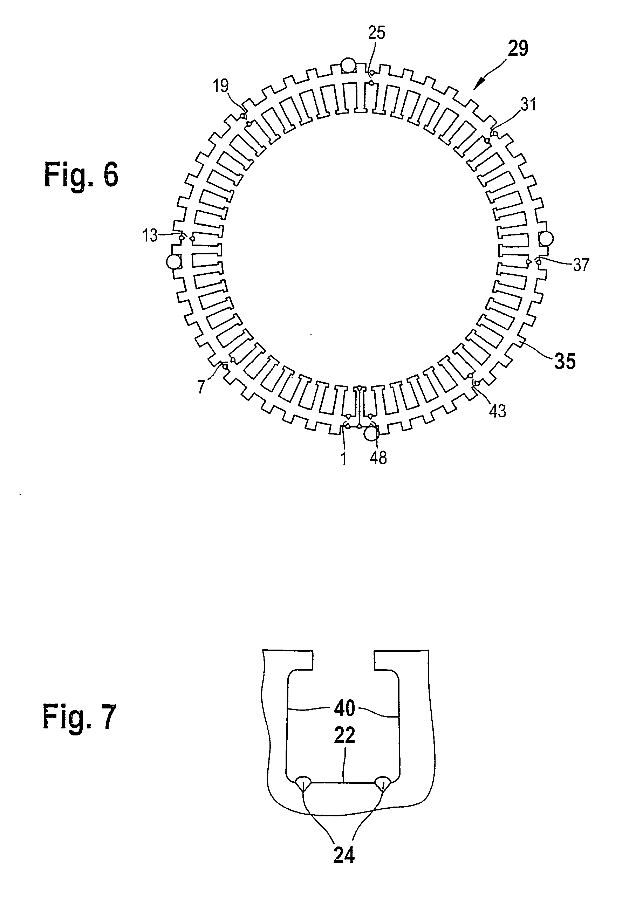

In Figur 6 ist ein weiteres Ausführungsbeispiel in einer Abwandlung des Ausführungsbeispiel gemäß Figur 5 dargestellt. Die Schweißnähte 24 an der Innenseite E des Ständerblechpakets 29 sind wie in den Ausführungsbeispielen gemäß der Figuren 3, 4, und 5 an den Positionen 1, 7, 13, 19, 25, 31, 37 und 43 der Nuten 16 sowie schließlich auch an der Position 48 angebracht. In Abwandlung der vorherigen Ausführungsbeispiele sind die Schweißnähte 24 radial gegenüberliegend von den bereits erwähnten Schweißnähten 24 an der Innenseite des Ständerblechpakets 29 auf der Außenseite R angebracht. Für die Schweißnähte 24 auf den Außenzähnen 35 bzw. auf der Außenseite R des Ständerblechpakets 29 gilt ebenso, dass ein Abstand zwischen den äußeren Schweißnähten 24 im Wesentlichen einer Periodizität von 2 mal τₚ entspricht. Auch für die Schweißnähte 24 auf der Außenseite R gilt, dass hier eine Toleranz von maximal 2 Zähnen 15 zulässig ist.

In Figur 7 ist ein weiteres Ausführungsbeispiel einer Anordnung von Schweißnähten 24 am Ständerblechpaket 29 dargestellt. Um ein Aufspreizen des Ständerblechpakets 29 beim Rundbiegen weiter zu vermeiden, ist vorgesehen, dass die Nut 16, für die überhaupt eine Schweißnaht 24 vorgesehen ist, zwei Schweißnähte 24 trägt, die an einer Position angeordnet sind, wo der Nutgrund 22 in eine Zahnflanke übergeht. Auch für eine solche paarweise Anordnung von Schweißnähten 24 im Nutgrund 22 gelten die gleichen, zuvor erwähnten Auslegungsregeln. Dies bedeutet, wo zuvor eine Schweißnaht 24 vorgesehen war und nunmehr zwei Schweißnähte 24 vorgesehen sind, werden die paarweise Schweißnähte 24 auslegungsmäßig wie eine behandelt.

## Patentansprüche

1. Ständerblechpaket (29) für eine elektrische Maschine, das aus einzelnen, geschichteten Lamellen (10) besteht, wobei dieses Ständerblechpaket (29) eine mit Zähnen (15) und Nuten (16) zur Aufnahme einer Wicklung (26) versehene Seite (E) aufweist, **dadurch gekennzeichnet, dass** die Lamellen streifenförmig und so umgeformt sind, dass ein ringförmiges Ständerblechpaket (29) entsteht, und dass zumindest in einem Nutgrund (22) zumindest eine Schweißnaht (24) zur Fixierung der geschichteten Lamellen (10) gesetzt ist.

2. Ständerblechpaket nach Anspruch 1, wobei mehrere Schweißnähte (24) in einem Abstand voneinander angeordnet sind, der im Wesentlichen einer Periodizität von 2 mal τₚ entspricht.

3. Ständerblechpaket nach Anspruch 1 oder 2, wobei der Abstand zumindest zweier Schweißnähte (24) sechs Zähne (15) und zusätzlich einer Toleranz von maximal zwei Zähnen (15) entspricht.

4. Ständerblechpaket nach einem der vorhergehenden Ansprüche, mit einer Stoßstelle (32), an der zumindest zwei Enden zumindest einer streifenförmigen Lamelle (10) aneinander anliegen, wobei beidseitig der Stoßstelle (32) in der jeweils nächsten Nut (16) je eine Schweißnaht (24) mehrere Lamellen (10) miteinander verbindet.

5. Ständerblechpaket nach einem der Ansprüche 1 bis 3, mit einer Stoßstelle (32), an der zumindest zwei Enden zumindest einer streifenförmigen Lamelle (10) aneinander anliegen, wobei beidseitig der Stoßstelle (32) je eine Schweißnaht (24) mehrere Lamellen (10) auf einer Außenseite (R) miteinander verbindet.

6. Ständerblechpaket nach Anspruch 4 oder 5, wobei in der Stoßstelle (32) zumindest eine Schweißnaht (24) auf der Außenseite (R) angebracht ist.

7. Ständerblechpaket nach Anspruch 4, 5, oder 6, wobei an der Stoßstelle (32) zumindest eine Schweißnaht (24) auf der Innenseite (E) angebracht ist.

8. Ständerblechpaket nach einem der vorhergehenden Ansprüche, wobei am Außenumfang zumindest zwei Schweißnähte (24) angebracht sind, die in einem Abstand voneinander angeordnet sind, der im Wesentlichen einer Periodizität von 2 mal τₚ entspricht.

9. Verfahren zur Herstellung eines Ständerblechpakets (29) für eine elektrische Maschine, wobei das Ständerblechpaket (29) derart hergestellt wird, dass mehrere Lamellen (10), die jeweils eine mit Zähnen (15) und Nuten (16) zur Aufnahme einer Wicklung versehen Seite (E) aufweisen, in einem Verfahrensschritt so paketiert werden, dass alle Zähne (15) bzw. Nuten (16) deckend übereinander liegen und **dadurch** ein lamelliertes Streifenpaket (19) gebildet ist, wobei in einem weiteren Verfahrensschritt das Streifenpaket (19) so umgeformt wird, dass ein ringförmiges Ständerblechpaket (29) entsteht, wobei in einem Verfahrensschritt vor dem Umformen in zumindest einen Nutgrund (22) eine Schweißnaht (24) zur Fixierung der geschichteten Lamellen (10) gesetzt wird.

10. Verfahren nach Anspruch 9, **dadurch gekennzeichnet, dass** nach dem Setzen einer Schweißnaht (24) zumindest in einen Nutgrund (22), das so fixierte lamellierte Streifenpaket (19) mit einer Wicklung (26) besetzt wird und anschließend das lamellierte Streifenpaket (19) mit der Wicklung (26) so umgeformt wird, dass das ringförmige Ständerblechpaket (29) entsteht.

11. Verfahren nach Anspruch 9 oder 10, **dadurch gekennzeichnet, dass** das Ständerbleckpaket (29) an einer Fügestelle (32) beispielsweise durch Schweißen verbunden wird.

12. Verfahren nach einem der Ansprüche 9 bis 11, **dadurch gekennzeichnet, dass** mehrere Schweißnähte (24) in einem Abstand voneinander angeordnet werden, der im Wesentlichen einer Periodizität von 2*τₚ entspricht.

13. Verfahren nach Anspruch 12, **dadurch gekennzeichnet, dass** der Abstand zumindest zweier Schweißnähte (24) sechs Zähne (15) und zusätzlich eine Toleranz von maximal zwei Zähnen (15) entspricht.

14. Verfahren nach einem der Ansprüche 9 bis 13, **dadurch gekennzeichnet, dass** beidseitig einer Stoßstelle (32), an der zumindest zwei Enden zumindest einer streifenförmigen Lamelle (10) aneinander anliegen, in der jeweils nächsten Nut (16) eine Schweißnaht (24) gesetzt wird, mit der mehrere Lamellen (16) miteinander verbunden werden.

15. Verfahren nach einem der Ansprüche 9 bis 14, **dadurch gekennzeichnet, dass** an der Stoßstelle (32), an der zumindest zwei Enden zumindest einer streifenförmigen Lamelle (10) aneinander anliegen, beidseitig der Stoßstelle (32) je eine Schweißnaht (24) gesetzt wird, um mehrere Lamellen (10) auf einer Außenseite (R) miteinander zu verbinden.

16. Verfahren nach einem der Ansprüche 9 bis 15, **dadurch gekennzeichnet, dass** in der Stoßstelle (32) zumindest eine Schweißnaht (24) auf der Außenseite (R) angebracht wird.

17. Verfahren nach einem der Ansprüche 9 bis 16, **dadurch gekennzeichnet, dass** an der Stoßstelle (32) zumindest eine Schweißnaht (24) auf der Innenseite (E) angebracht wird.

## Claims

1. Laminated stator core (29) for an electrical machine, which comprises individual layers of laminates (10), wherein this laminated stator core (29) has a face (E) which is provided with teeth (15) and slots (16) for holding a winding (26), **characterized in that** the laminates are in the form of strips and are shaped so as to create an annular laminated stator core (29), and **in that** at least one weld bead (24) is placed at least in one slot base (22) in order to fix the layers of laminates (10).

2. Laminated stator core according to Claim 1, wherein a plurality of weld beads (24) are arranged at a distance from one another which corresponds essentially to a periodicity of 2 x τₚ.

3. Laminated stator core according to Claim 1 or 2, wherein the distance between at least two weld beads (24) corresponds to six teeth (15) plus a maximum tolerance of two teeth (15).

4. Laminated stator core according to one of the preceding claims, having an abutment point (32) at which at least two ends of at least one laminate (10) which is the form of a strip rest on one another, wherein one weld bead (24) in each case connects a plurality of laminates (10) to one another in the respective next slot (16) on both sides of the abutment point (32).

5. Laminated stator core according to one of Claims 1 to 3, having an abutment point (32) at which at least two ends of at least one laminate (10) which is in the form of a strip rest on one another, wherein one weld bead (24) in each case connects a plurality of laminates (10) to one another on an outer face (R) on both sides of the abutment point (32).

6. Laminated stator core according to Claim 4 or 5, wherein at least one weld bead (24) is applied on the outer face (R) in the abutment point (32).

7. Laminated stator core according to Claim 4, 5 or 6, wherein at least one weld bead (24) is applied on the inner face (E) at the abutment point (32).

8. Laminated stator core according to one of the preceding claims, wherein at least two weld beads (24) are applied to the external circumference and are arranged at a distance from one another which corresponds essentially to a periodicity of 2 x τₚ.

9. Method for producing a laminated stator core (29) for an electrical machine, wherein the laminated stator core (29) is produced such that a plurality of laminates (10), which each have a face (E) which is provided with teeth (15) and slots (16) for holding a winding, are packed in a method step such that all the teeth (15) and slots (16) are located such that they cover one another, thus forming a laminated strip core (19) wherein, in a further method step, the strip core (19) is shaped so as to create an annular laminated stator core (29), wherein, in a method step before the shaping process, a weld bead (24) for fixing the layers of laminates (10) is placed in at least one slot base (22) .

10. Method according to Claim 9, **characterized in that**, after a weld bead (24) has been placed in at least one slot base (22), the laminated strip core (19) fixed in this way is fitted with a winding (26), and the laminated strip core (19) with the winding (26) is then shaped so as to create the annular laminated stator core (29).

11. Method according to Claim 9 or 10, **characterized in that** the laminated stator core (29) is connected, for example by welding, at a joint point (32).

12. Method according to one of Claims 9 to 11, **characterized in that** a plurality of weld beads (24) are arranged at a distance from one another which corresponds essentially to a periodicity of 2 x τₚ.

13. Method according to Claim 12, **characterized in that** the distance between at least two weld beads (24) corresponds to six teeth (15) plus a maximum tolerance of two teeth (15).

14. Method according to one of Claims 9 to 13, **characterized in that** on both sides of an abutment point (32), at which at least two ends of at least one laminate (10) which is in the foam of a strip rest on one another, a weld bead (24) is placed in the respective next slot (16), by means of which a plurality of laminates (10) are connected to one another.

15. Method according to one of Claims 9 to 14, **characterized in that** a weld bead (24) is in each case placed on both sides of the abutment point (32), at the abutment point (32) at which at least two ends of at least one laminate (10) which is the form of a strip rest on one another, in order to connect a plurality of laminates (10) to one another on an outer face (R).

16. Method according to one of Claims 9 to 15, **characterized in that** at least one weld bead (24) is applied to the outer face (R) in the abutment point (32).

17. Method according to one of Claims 9 to 16, **characterized in that** at least one weld bead (24) is applied to the inner face (E) at the abutment point (32).

## Revendications

1. Paquet (29) de tôles pour stator de machine électrique, constitué d'un empilement de lamelles distinctes (10),
ce paquet (29) de tôles pour stator présentant un côté (E) doté de dents (15) et de rainures (16) de reprise d'un enroulement (26),
**caractérisé en ce que**
les lamelles présentent la forme de rubans et sont déformées de manière à obtenir un paquet (29) de tôles pour stator de forme annulaire et
**en ce qu'**au moins un cordon de soudure (24) qui fixe les lamelles (10) empilées est prévu dans le fond (22) d'au moins une rainure.

2. Paquet de tôles pour stator selon la revendication 1, **caractérisé en ce que** plusieurs cordons de soudure (24) sont disposés à une distance mutuelle qui correspond essentiellement à une périodicité de 2 fois τₚ.

3. Paquet de tôles pour stator selon la revendication 1 ou 2, **caractérisé en ce que** la distance entre au moins deux cordons de soudure (24) correspond à six dents (15) et de plus à une tolérance d'au plus deux dents (15).

4. Paquet de tôles pour stator selon l'une des revendications précédentes, doté d'un emplacement de jonction (32) sur lequel au moins deux extrémités d'au moins une lamelle (10) en forme de ruban reposent l'une contre l'autre, un cordon de soudure (24) reliant mutuellement plusieurs lamelles (10) dans chacune des rainures (16) voisines des deux côtés de l'emplacement de jonction (32).

5. Paquet de tôles pour stator selon l'une des revendications 1 à 3, doté d'un emplacement de jonction (32) sur lequel au moins deux extrémités d'au moins une lamelle (10) en forme de ruban reposent l'une contre l'autre, un cordon de soudure (24) reliant mutuellement plusieurs lamelles (10) étant formé sur le côté extérieur (R) des deux côtés de l'emplacement de jonction (32).

6. Paquet de tôles pour stator selon la revendication 4 ou 5, dans lequel au moins un cordon de soudure (24) est placé sur le côté extérieur (R) de l'emplacement de jonction (32).

7. Paquet de tôles pour stator selon la revendication 4, 5 ou 6, dans lequel au moins un cordon de soudure (24) est placé sur le côté intérieur (E) de l'emplacement de jonction (32).

8. Paquet de tôles pour stator selon l'une des revendications précédentes, dans lequel au moins deux cordons de soudure (24) disposés à une distance mutuelle qui correspond essentiellement à une périodicité de 2 fois τₚ sont placés à la périphérie extérieure.

9. Procédé de fabrication d'un paquet (29) de tôles pour stator pour une machine électrique, dans lequel le paquet (29) de tôles pour stator est fabriqué en empilant dans une étape du procédé plusieurs lamelles (10) qui présentent chacune un côté (E) doté de dents (15) et de rainures (16) de reprise d'un enroulement, de telle sorte que toutes les dents (15) et rainures (16) se recouvrent mutuellement et forment ainsi un paquet stratifié (19) de rubans, et dans lequel, dans une autre étape du procédé, le paquet (19) de rubans est déformé de manière à obtenir un paquet annulaire (29) de tôles pour stator et dans une étape de procédé qui précède la déformation, un cordon de soudure (24) qui fixe les lamelles (10) empilées est formé dans le fond (22) d'au moins une rainure.

10. Procédé selon la revendication 9, **caractérisé en ce qu'**après la formation d'un cordon de soudure (24) dans le fond (22) d'au moins une rainure, le paquet stratifié (19) de rubans ainsi fixé est occupé par un enroulement (26) et **en ce que** le paquet stratifié (19) de rubans doté de l'enroulement (26) est ensuite déformé de manière à obtenir le paquet annulaire (29) de tôles pour stator.

11. Procédé selon la revendication 9 ou 10, **caractérisé en ce que** le paquet (29) de tôles pour stator est relié par exemple par soudage en un emplacement de jonction (32).

12. Procédé selon l'une des revendications 9 à 11, **caractérisé en ce que** plusieurs cordons de soudure (24) sont disposés à une distance mutuelle qui correspond essentiellement à une périodicité de 2 * τₚ.

13. Procédé selon la revendication 12, **caractérisé en ce que** la distance entre au moins deux cordons de soudure (24) correspond à six dents (15) et de plus à une tolérance d'au plus deux dents (15).

14. Procédé selon l'une des revendications 9 à 13, **caractérisé en ce qu'**un cordon de soudure (24) qui relie mutuellement plusieurs lamelles (10) est formé dans chacune des rainures (16) voisines des deux côtés d'un emplacement de jonction (32) sur lequel au moins deux extrémités d'au moins une lamelle (10) en forme de ruban reposent l'une contre l'autre.

15. Procédé selon l'une des revendications 9 à 14, **caractérisé en ce qu'**à l'emplacement de jonction (32) sur lequel au moins deux extrémités d'au moins une lamelle (10) en forme de ruban reposent l'une contre l'autre, un cordon de soudure (24) est formé de chaque côté de l'emplacement de jonction (32) pour relier mutuellement plusieurs lamelles (10) par un côté extérieur (R).

16. Procédé selon l'une des revendications 9 à 15, **caractérisé en ce qu'**à l'emplacement de jonction (32), au moins un cordon de soudure (24) est formé sur le côté extérieur (R).

17. Procédé selon l'une des revendications 9 à 16, **caractérisé en ce qu'**à l'emplacement de jonction (32), au moins un cordon de soudure (24) est formé sur le côté intérieur (E).
